# EUROPEAN PATENT SPECIFICATION

(11) **EP 0 584 784 B1**
(45) Date of publication and mention of the grant of the patent: **03.03.1999**
(21) Application number: 93113482.9
(22) Date of filing: 24.08.1993
(51) Int. Cl.: F16L 55/172, F16L 21/06, F16L 33/04

(54) **Pipe or hose with clamp means**
Rohr oder Schlauch mit Klemmittel
Tuyau avec moyens de serrage

(30) Priority: 26.08.1992 IL 102960
(43) Date of publication of application: 02.03.1994
(73) Proprietor: ELIEZER KRAUSZ INDUSTRIAL DEVELOPMENT LTD., Tel Aviv 46484 (IL)
(72) Inventor: Krausz, Eliezer, Tel Aviv 46484 (IL)
(74) Representative: Kraus, Walter, Dr.

(56) References cited:
- DE-C- 4 027 032
- GB-A- 104 484
- GB-A- 926 668
- US-A- 3 905 623
- US-A- 4 365 393
- US-A- 4 463 975

## Description

The invention relates to a fluid conducting pipe or hose conduit with a clamp coupling and repairing means comprising a metal band, such band being bent to form a circular, sleeve-like structure, the two free edges of which being extended and bent radially outwardly over a reinforcement body, throughgoing holes being provided in the said outwardly extended edge portions, a screw bolt passed through the said holes and nuts screwed on said bolts pressing the said extended portions against one another, so spanning fast the said sleeve around the respective conduit.

More generally, the invention relates to clamping, coupling and connecting means to be used with pipes of different materials and also with hose-like fluid conduits of plastics, rubber or like materials.

There are known and exist many types of conduits for fluids, such as water pipes, sewage pipes, gas, oil pipes and others as well as hose-like conduits, these latter are composed of pipe or hose sections which are connected to each other by various connecting and coupling means, a large number of which having different configurations and build are known, e.g. from US-A-4 365 393, DE-C-4 027 032, US-A-4 463 975, GB-A-926 668 and US-A-3 905 623.

From the aforementioned document US-A-4 463 975 there is known a clamp coupling and repairing means of the type mentioned above in the beginning. In this clamp coupling and repairing means the outwardly extended edge portions of the band are reinforced by force bars and the force bars are shaped and arranged such that during tightening one force bar rotates and slides upwardly into parallel position to the other force bar and thereby wrapping up the end of the band, with the rotational axis crossing approximately on the axis of the bolt and within the middle region of the sliding force bar.

It is an object of the invention to provide a fluid conducting pipe or hose conduit with coupling means for repair of pipes.

It is a further object of the invention to provide a fluid conducting pipe or hose conduit with a coupling which could be easily fitted on the damaged place and easily tightened around it.

It is yet a further object of the invention to provide a fluid conducting pipe or hose conduit with such coupling which could also be used for connecting two pipe ends.

The present invention relates to the kind known as fluid conducting pipes or hose conduits with clamp couplings, and is used also, but not exclusively, in the field of repair of metal or synthetic material conduits which have sprung a leak, especially in cases where the immediate and speedy repair is mandatory in order to avoid loss of the respective fluid, be it liquid or gaseous, and the possible environmental damage which might be a consequence of such leak.

In its broadest aspects such coupling and repairing means comprise a relatively wide metal band provided with a tightening arrangement, the said band being designed to be placed around a rubber or like band and around a pipe or hose.

The present invention relates to a fluid conducting pipe or hose conduit with such clamping and coupling means of the type referred to.

According to the invention there is provided a clamp coupling and repairing means of the type mentioned in the beginning which is characterized in that
(a) said metal band being relatively wide in relation to the diameter of the respective conduit, and
(b) said two extended portions are in the tightened condition of said clamp coupling and repairing means, not parallel to each other, and at the free edges thereof provide a turning axis or counter point for said extended portions.

Thus, the invention provides in one embodiment a fluid conducting pipe or hose conduit with a clamp coupling and repairing means which comprises a relatively wide metal band which is bent to form a sleeve like structure, the two free edges of which being extended and bent outwardly over a reinforcement body, said two outwardly extending portions are not parallel to each other and incline towards the edge thereof, a plate or plates member is laid against said extending portion, throughgoing holes being provided in said plates and said outwardly extended portions, screw bolts passed through said holes and nut screwed on said bolts.

Preferred embodiments of the invention will now be described with reference to the annexed drawings in which:

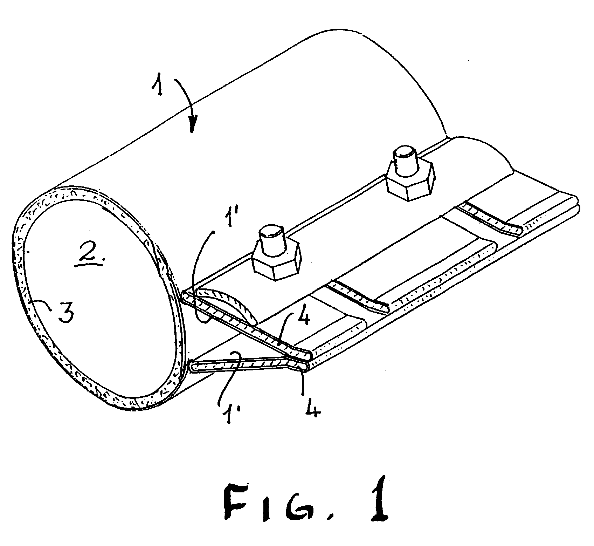

Fig. 1 is a perspective view of the new means, while
Fig. 2 is a cross section thereof,

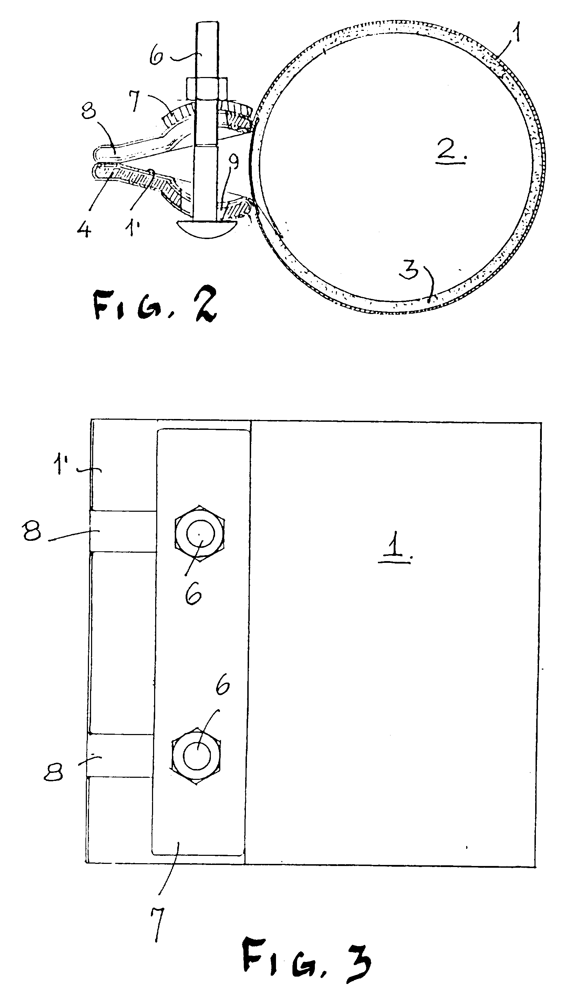

Fig. 3 is a plan view thereof,

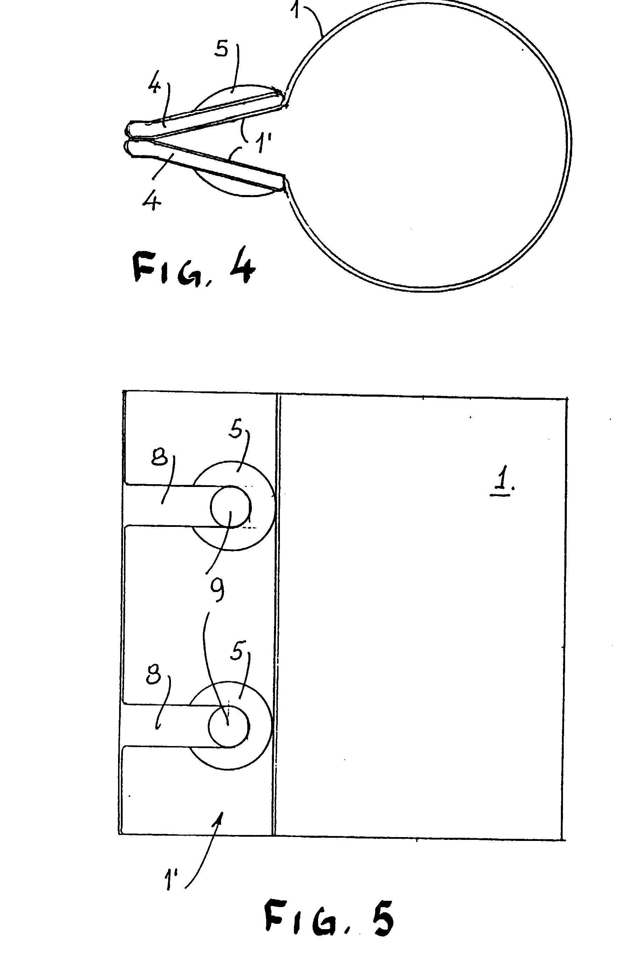

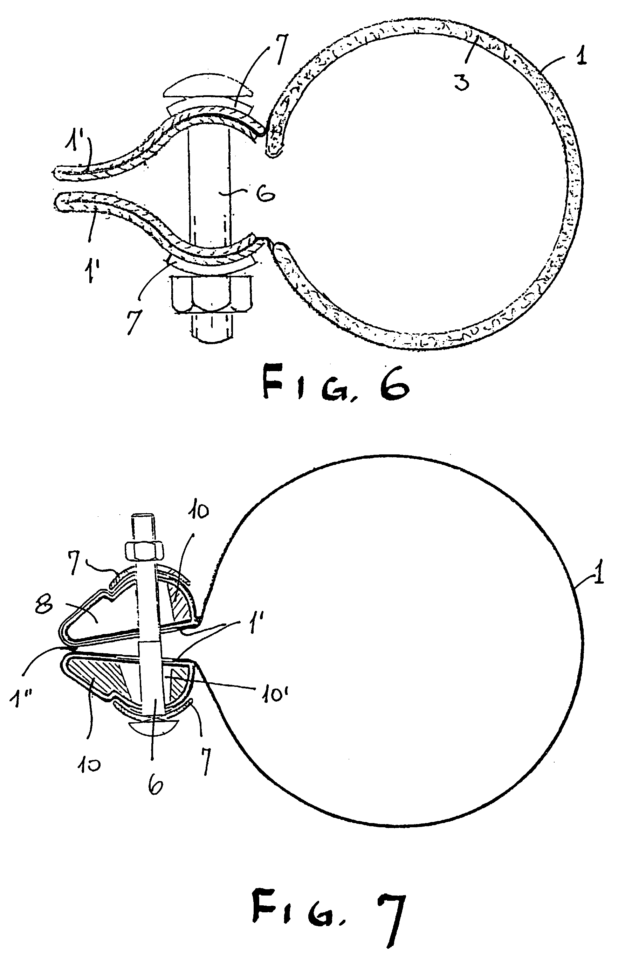

Figs. 4 and 5 illustrate end and plan views without some parts,
Fig. 6 is an end view of an embodiment of the invention, while
Fig. 7 is a further embodiment of the new means.

Turning first to Fig, 1, the clamping and coupling means comprise the metal band 1, In practice, when actually used, the band is placed in a sleeve like manner around the two pipe ends to be connected, preferably with the interposition of a packing 3, or around the conduit which has sprung a leak, at the damaged part thereof, whereupon both free edge portions 1' of the sleeve 1 are extended and bent radially outwardly of the circular space 2 of the sleeve 1.

Extensions 1' are further bent radially enclosing two complementary plates 4 reinforcing said extensions. Extensions 1' are preferably provided with bulge like protrusions 5, in the centre of which there is provided a hole 9 where a plurality of nuts and bolts 6 is provided, The bolts passing through plates 4 and extension 1' and through part spherical protrusions 5, A further plate 7 is provided to enable applying pressure on said extension.

By tightening bolts 6, section 1' are drawn together in an obvious manner, Spherical protrusions 5 enable said nuts and bolts to remain parallel to each other, whether said means are in an "open" position or "closed" position.

As can be seen, the two extension portions 1' are not parallel to each other but incline such that by tightening bolts 6 the free edge of said extension engages each other acting as an axis which enables the tightening properly. In order to place the new means over a given pipe slots 8 are provided in extension 1' which enables the insertion of said extension without removing bolt 6,

Fig. 6 illustrates an embodiment of the means according to the invention where instead of the spheric bulge 5 extensions 1' are bent in a wavy line forming a continuous longitudinal convex bulge, while the free edges are adapted to engage when bolt 6 is tightened,

Fig. 7 illustrates a further embodiment of the invention, Likewise sleeve 1 is provided with free edge portions 1', however these being extended and bent around a rigid body 10 , Bolts 6 pass through bores 10' and through part spherical pressure plate 7. One side of extension 1' is provided with a slot 8 which enables the placing or releasing of the sleeve without removing bolt 6 only by passing said slot 8,

By tightening bolt 6 sections 1' are drawn together in an obvious manner. Part spherical pressure plates 7 enable said nut to remain in the same position. By the tightening of the extreme edges 1" of extension 1' it establishes contact and acts as an axis.

As can be seen from the description, the new fluid conducting pipe or hose conduit with a coupling means according to the invention is unique in its construction by providing an axis or pivoting point which enables the tightening of the coupling means and which acts as counter point.

## Claims

1. A fluid conducting pipe or hose conduit with a clamp coupling and repairing means comprising a metal band (1),such band (1) being bent to form a circular, sleeve-like structure, the two free edges (1') of which being extended and bent radially outwardly over a reinforcement body (4), throughgoing holes (9) being provided in the said outwardly extended edge portions (1'), a screw bolt (6) passed through the said holes (9) and nuts screwed on said bolts (6) pressing the said extended portions (1') against one another, so spanning fast the said sleeve around the respective conduit,
characterized in that
(a) said metal band (1) being relatively wide in relation to the diameter of the respective conduit, and
(b) said two extended portions (1') are in the tightened condition of said clamp coupling and repairing means, not parallel to each other, and at the free edges thereof provide a turning axis or counter point for said extended portions (1').

2. The fluid conducting pipe or hose conduit with a clamp coupling and repairing means of claim 1, characterized by the position of two plate members (5, 7) laid against the two extending portions (1').

3. The fluid conducting pipe or hose conduit with a clamp coupling and repairing means of claim 1 or 2, characterized by extension portions (1') which enclose a rigid material body (4) provided with throughgoing bore (9).

4. The fluid conducting pipe or hose conduit with a clamp coupling and repairing means of claim 1, 2 or 3, characterized by a part spherical plate (5, 7) placed over said extensions (1').

5. The fluid conducting pipe or hose conduit with a clamp coupling and repairing means of any one of claims 1 to 4, characterized in that a slot (8) is provided in one of the extensions (1') to facilitate the placing and releasing of said sleeve-like structure.

## Patentansprüche

1. Fluidleitende Rohr- oder Schlauchleitung mit einem Klemmkupplungs- und Reparaturmittel, umfassend ein Metallband (1), wobei dasselbe Band (1) zur Ausbildung einer kreisförmigen, hülsenartigen Struktur gebogen ist, wobei die beiden freien Ränder (1') desselben über einen Verstärkungskörper (4) radial auswärts verlängert und gebogen sind, wobei durchgehende Löcher (9) in den nach auswärts verlängerten Randteilen (1') vorgesehen sind, wobei ein Schraubenbolzen (6) durch die Löcher (9) hindurchgeführt und Muttern auf die Bolzen bzw. Schrauben (6) geschraubt sind, welche die verlängerten Teile (1') gegeneinander drücken, so daß sie die Hülse um die jeweilige Leitung fest verspannen,
dadurch **gekennzeichnet**, daß
(a) das Metallband (1) relativ weit bzw. breit im Verhältnis zu dem Durchmesser der jeweiligen Leitung ist, und
(b) die beiden verlängerten Teile (1') in dem festgezogenen Zustand des Klemmkupplungs- und Reparaturmittels nicht parallel zueinander sind und an den freien Rändern derselben eine Dreh- bzw. Schwenkachse oder einen Gegenpunkt für die verlängerten Teile (1') vorsehen.

2. Fluidleitende Rohr- oder Schlauchleitung mit einem Klemmkupplungs- und Reparaturmittel des Anspruchs 1, **gekennzeichnet** durch die Position bzw. Existenz von zwei Plattenteilen (5, 7), die gegen die beiden verlängernden Teile (1') gelegt sind.

3. Fluidleitende Rohr- oder Schlauchleitung mit einem Klemmkupplungs- und Reparaturmittel des Anspruchs 1 oder 2, **gekennzeichnet** durch Verlängerungsteile (1'), welche einen starren bzw. steifen Materialkörper (4) um- bzw. einschließen, der mit durchgehender Bohrung (9) versehen ist.

4. Fluidleitende Rohr- oder Schlauchleitung mit einem Klemmkupplungs- und Reparaturmittel des Anspruchs 1, 2 oder 3, **gekennzeichnet** durch eine teilsphärische Platte (5, 7), die über den Verlängerungen (1') plaziert ist.

5. Fluidleitende Rohr- oder Schlauchleitung mit einem Klemmkupplungs- und Reparaturmittel nach irgendeinem der Ansprüche 1 bis 4, dadurch **gekennzeichnet**, daß ein Schlitz (8) in einer der Verlängerungen (1') vorgesehen ist, um das Plazieren und Loslösen der hülsenartigen Struktur zu erleichtern.

## Revendications

1. Tuyau ou conduit flexible de fluide pourvu d'un dispositif de serrage pour couplage et réparation comprenant une bande en métal (1), cette bande (1) étant pliée de manière à former une structure semblable à un manchon circulaire dont les deux bords libres (1') sont prolongés et pliés radialement vers l'extérieur autour d'un corps de renforcement (4), des trous traversants (9) étant prévus dans lesdites parties de bord prolongées vers l'extérieur (1'), une vis (6) passant dans lesdits trous (9) et des écrous étant vissés sur lesdites vis (6) pour presser lesdites parties prolongées (1') l'une contre l'autre, de façon à bloquer ledit manchon autour du conduit respectif,
caractérisé en ce que :
(a) ladite bande en métal (1) est relativement large par rapport au diamètre du conduit respectif, et
(b) lesdites deux parties prolongées (1'), dans l'état serré dudit dispositif de serrage pour couplage et réparation, ne sont pas mutuellement parallèles et elles définissent à l'endroit de leurs bords libres un axe de pivotement ou un point de réaction pour lesdites parties prolongées (1').

2. Tuyau ou conduit flexible de fluide pourvu d'un dispositif de serrage pour couplage et réparation selon la revendication 1, caractérisé en ce que deux plaques (5,7) sont placées contre les deux parties prolongées (1').

3. Tuyau ou conduit flexible de fluide pourvu d'un dispositif de serrage pour couplage et réparation selon la revendication 1 ou 2, caractérisé en ce que les parties prolongées (1') entourent un corps en matière rigide (4) comportant un trou traversant (9).

4. Tuyau ou conduit flexible de fluide pourvu d'un dispositif de serrage pour couplage et réparation selon la revendication 1, 2 ou 3, caractérisé en ce qu'une plaque en segment de sphère (5,7) est placée sur lesdites parties prolongées (1').

5. Tuyau ou conduit flexible de fluide pourvu d'un dispositif de serrage pour couplage et réparation selon une quelconque des revendications 1 à 4, caractérisé en ce qu'une fente (8) est prévue dans une des parties prolongées (1') pour faciliter la mise en place et l'enlèvement de ladite structure en forme de manchon.
